# EUROPEAN PATENT SPECIFICATION

(11) **EP 1 713 664 B1**
(45) Date of publication and mention of the grant of the patent: **09.07.2008**
(21) Application number: 05704681.5
(22) Date of filing: 07.01.2005
(51) Int. Cl.: B60R 21/16

(54) **METHOD OF MAKING AN AIR-BAG AND AN AIR-BAG**
VERFAHREN ZUR HERSTELLUNG EINES AIRBAGS UND AIRBAG
PROCEDE DE FABRICATION D'UN COUSSIN DE SECURITE ET COUSSIN DE SECURITE

(30) Priority: 10.02.2004 GB 0402898
(43) Date of publication of application: 25.10.2006
(73) Proprietor: AUTOLIV DEVELOPMENT AKTIEBOLAG, 447 83 Vargarda (SE)
(72) Inventor: UNTERSINGER, Pierre, F-76000 Rouen (FR); DUFAUT, Dominique, F-77450 Esbly (FR); FOURET, Charles, F-76220 Cuy Saint Fiacre (FR); PERON, Alexandre, F-95450 Sagy (FR)
(74) Representative: Parry, Simon James
(86) International application number: PCT/SE2005/000007
(87) International publication number: WO 2005/075259

(56) References cited:
- WO-A1-01/51317
- DE-A1- 19 801 777
- US-A- 5 382 051
- US-A- 5 653 464
- US-A- 5 879 767
- US-A1- 2002 185 847

## Description

**THE PRESENT INVENTION** relates to an air-bag, and more particularly relates to an air-bag intended for use in a motor vehicle to provide protection for an occupant of the motor vehicle.

It has been proposed previously to fabricate air-bags from a number of different materials. Many air-bags are fabricated using a fabric material, which is woven from appropriate threads. Such an air-bag is typically folded and stored within an appropriate housing. On deployment of the air-bag the air-bag emerges from the housing and unfolds. Air-bags of this type may be of particular use as steering wheel air-bags or air-bags mounted in the front dashboard, since the air-bag, on deployment, moves into a free space in which it can unfold.

Other air-bags are provided which are located at other positions within the motor vehicle. For example, an air-bag may be mounted in the squab of the seat of a vehicle, at a point just in front of the hips of the seat occupant. The air-bag may be inflated during an accident situation to provide a ridge extending across the front part of the seat to minimise the risk of the seat occupant "submarining". Alternatively an air-bag may be mounted on the floor of the motor vehicle in the region of the feet of a seat occupant. Such an air-bag may be inflated during an accident situation in order to lift the feet of the seat occupant above the floor pan of the vehicle. This may minimise the risk of injury being imparted to the feet, ankles and legs of the seat occupant by the deformation of the floor pan that occurs during an accident.

It has also been proposed to provide a knee air-bag, in the form of an air-bag mounted on the underside of the dashboard of the motor vehicle, the air-bag being intended to inflate into the space between the dashboard of the motor vehicle and the knees of an occupant of the vehicle in order to prevent the knees of the occupant moving forwardly and impacting with the dashboard in such a way that knee injury is caused.

Many of these air-bags have to be made of a material that does not unfold on inflation, since the air-bag is located in such a position that there is no free space available for the air-bag to unfold.

Such air-bags often have to survive hostile conditions, especially a floor-mounted air-bag, which may be subjected to scuffing and also to a rather damp environment.

It has been proposed to fabricate bags of the type generally discussed above from various materials including metal and polymer materials.

US2002/0185847 discloses the features of the preamble of claim 1 and describes an airbag for the foot-well of a motor vehicle which, in its pre-inflated condition, has, in its underside, a plurality of collapsible pleats arranged at locations where expansion of the airbag is to be promoted. The airbag may be formed from a single material as a unitary structure or the face and underside of the bag may be formed of separate materials subsequently joined together. The face portion and underside of the bag may be made of thermoplastics such as polypropylene, polycarbonates or polyurethanes.

The present invention seeks to provide an improved method of fabricating an air-bag, and an improved air-bag.

According to this invention there is provided a method of making an air-bag, the method comprising the steps of blow moulding a selected plastics material to form the air-bag utilising a mould corresponding to the final uninflated state of the air-bag, the mould being such that the moulded air-bag has at least one indented region which, on inflation of the air-bag, becomes outwardly extending, characterised in that the plastics material comprises a mixture of ABS and PC.

Preferably the method comprises the additional step of providing a gas generator for the air-bag.

Advantageously the indented region comprises an indented groove.

Conveniently the groove is annular.

Advantageously the indentation comprises a central indented area.

Preferably the plastic material comprises at least 40% ABS and PC.

Conveniently the plastic material comprises at least 80% ABS and PC.

In order that the invention may be more readily understood, and so that further features thereof may be appreciated, the invention will now be described, by way of example, with reference to the accompanying drawings in which:
FIGURE 1 is a part section, part phantom view of an air-bag in accordance with the invention prior to inflation,
FIGURE 2 is a view of the air-bag of Figure 1 following inflation,
FIGURE 3 is a view corresponding to Figure 1 showing an alternate air-bag in accordance with the invention prior to inflation,
FIGURE 4 is a view showing the air-bag of Figure 3 after inflation,
FIGURE 5 is a view corresponding to Figure 1 showing a further embodiment of an air-bag prior to inflation, and
FIGURE 6 is a view of the air-bag following inflation.

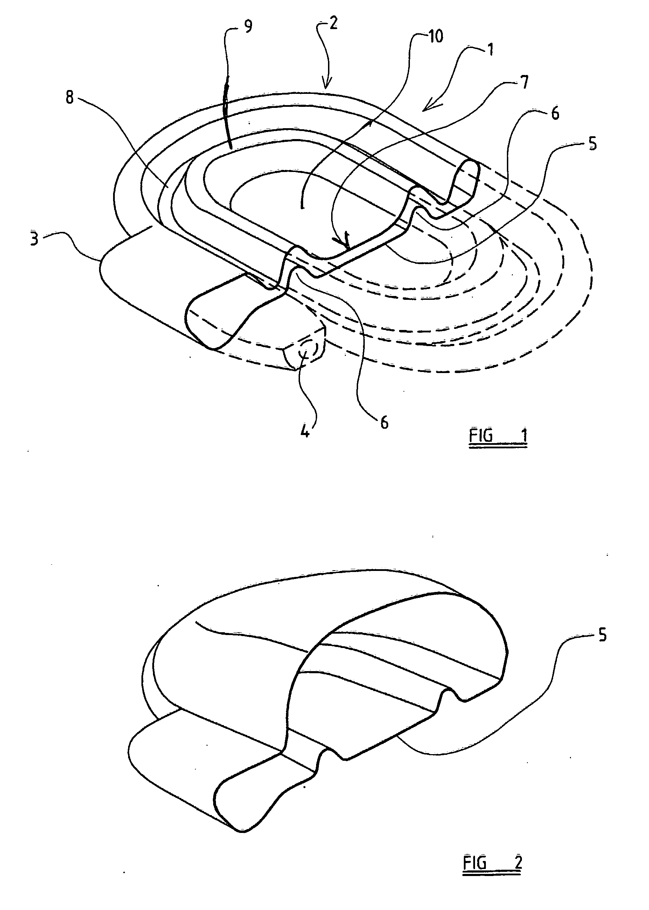

Referring initially to Figure 1, an air-bag 1 is shown. The air-bag 1 comprises a unitary body which is extruded and then blow moulded from an appropriate plastics material. Thus a parison is prepared by extrusion, the parison subsequently being blow moulded.

The plastics material is a resin which is a mixture of acrylonitrile-butadiene-styrene (ABS) and polycarbonate (PC). The preferred material incorporates at least 40% of polycarbonate and acrylonitrile-butadiene-styrene. Preferably the material incorporates at least 80% of polycarbonate and acrylonitrile-butadiene-styrene.

The selected plastics material is extruded in a molten form to create a parison, which is inserted into an appropriately shaped mould. The plastics material of the parison is then blow moulded in the mould. The mould is shaped so as to produce directly an air-bag, such as the air-bag 1 shown in Figure 1, without the need for any subsequent processing of the air-bag, or with a need for minimal further processing, such as the simple cutting of a hole from the gas generator or for a vent.

As can be seen from Figure 1 the air-bag comprises an inflatable region 2 of generally oval form, and, connected to one side of the inflatable region 2, an integral chamber 3 to receive a gas generator. The gas generator to be received within the housing 3 may be of generally cylindrical form. The housing 3 is provided with a an access aperture 4 provided at one end thereof through which the gas generator may be mounted in position. The gas generator itself may seal the aperture 4, or the aperture 4 may be sealed in some other way.

The oval inflatable region 2 is, in the uninflated state, of an overall generally flat configuration. The part of the moulding 5 which defines the lower surface of the inflatable region 2, in the orientation illustrated, is generally flat, but is provided with an oval inwardly directed groove which is located at a position spaced slightly inwardly from the outer periphery of the oval inflatable region 2.

The part of the moulding defining the upper layer 7 of the inflatable region is provided with an inwardly directly indented oval channel 8 located adjacent the periphery of the inflatable region 2, which is separated by an upstanding or outwardly directed ridge 9, from a further oval inwardly indented region 10. The ridge 9 is co-aligned with the groove 6.

The air-bag of Figure 1 may be located in position with the lower-most part 5 of the inflatable region 2 positioned against some sort of support so that, on deployment of the air-bag, it is only the upper part 7 of the inflatable region 2 which moves.

It is to be understood that when gas from the gas generator is injected into the interior of the air-bag, the inwardly indented regions forming the inwardly indented groove 8 and the inwardly indented central oval region 10 will be deformed so as to be outwardly directed. The air-bag will thus inflate to have the form shown in Figure 2.

It will be appreciated, therefore, that the air-bag 1 is blow moulded from a selected plastics material and is blow moulded to have a form with at least one inwardly indented region. When gas is directed to the interior of the air-bag, the inwardly indented region becomes deformed, enabling the air-bag to become inflated.

The air-bag of Figures 1 and 2 is designed to be used as a side air-bag, in which case it would be mounted on an appropriate part of a vehicle body, or a knee bag, in which case the air-bag will be mounted on the under-surface of a vehicle dashboard.

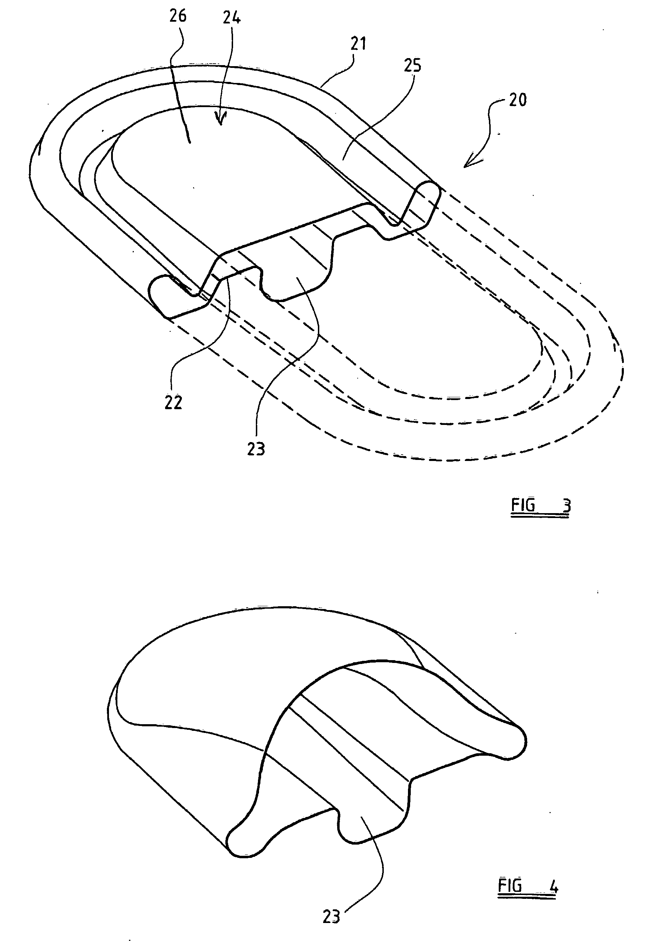

Figures 3 and 4 illustrate an alternative form of air-bag 20. The air-bag 20 has an inflatable region 21 of generally oval form. The under-surface of the inflatable region is provided with an inwardly directed channel 22 adjacent the periphery of the oval region, and a centrally located protruding chamber 23 which can accommodate a gas generator.

The upper part 24 is provided with an inwardly indented peripheral overall groove 25 which surrounds a substantially planar central oval region 26.

As can be seen from Figure 4, on inflation of the air-bag, the indented annular groove 25 becomes outwardly extended, and the planar region 24 also bows outwardly, to provide a fully inflated air-bag.

Again this air-bag may be used as a side air-bag or as a knee air-bag.

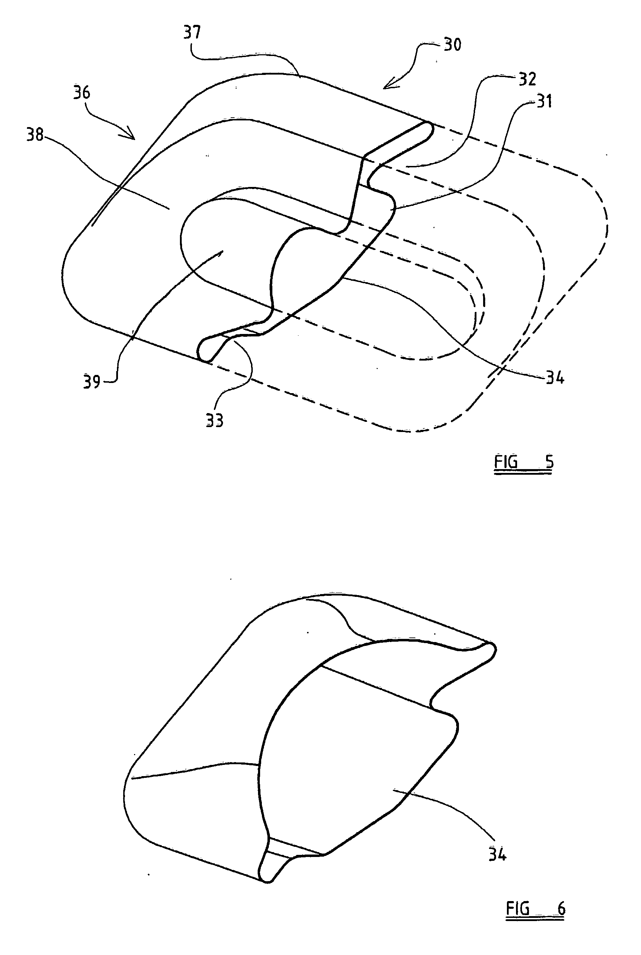

Figure 5 and 6 illustrate yet a further embodiment of an air-bag 30, which is again formed as a blow moulding of a selected plastics material. The air-bag 30 is intended for use as an anti-submarining air-bag in a vehicle seat.

The air-bag is provided with a generally rectangular overall form. The under-surface 31 of the air-bag is provided, at a forward edge of the air-bag, with an indentation 32 positioned to accommodate a front transverse beam of a vehicle seat. A further rearward indentation 33 is provided to accommodate a further transverse beam, and the intervening part 34 of the under-region 31 of the air-bag defines a chamber.

The upper surface 36 of the air-bag is provided with a generally planar peripheral region 37. An oval inwardly directed indentation 38 is provided which surrounds a central outwardly protruding formation 39.

On inflation of the air-bag the indented channel 38 becomes outwardly extending, permitting full inflation of the air-bag.

The use of the selected plastics material enables the air-bag to be manufactured cheaply and quickly, whilst providing an air-bag that can withstand hostile conditions.

When used in this Specification and Claims, the terms "comprises" and "comprising" and variations thereof mean that the specified features, steps or integers are included. The terms are not to be interpreted to exclude the presence of other features, steps or components.

## Claims

1. A method of making an air-bag (1), the method comprises the steps of blow moulding a selected plastics material to form the air-bag (1) utilising a mould corresponding to the final uninflated state of the air-bag, the mould being such that the moulded air-bag has at least one indented region (8),(10), which, on inflation of the air-bag, becomes outwardly extending, **characterised in that** the plastic comprises ABS and PC.

2. A method according to Claim 1 wherein the plastic comprises at least 40% ABS and PC.

3. A method according to Claim 2 wherein the plastic comprises at least 80% ABS and PC.

4. A method according to any preceding claim comprising the additional step of providing a gas generator (4) for the air-bag (1).

5. A method according to any preceding claim wherein the indented region comprises an indented groove (8).

6. A method according to Claim 5 wherein the groove (8) is annular.

7. A method according to Claim 5 or Claim 6 wherein the indentation comprises a central indented area (10).

8. A method according to Claim 1 wherein the plastic comprises a mixture of ABS and PC.

9. An air-bag (1) made by a method according to any one of the preceding claims.

## Patentansprüche

1. Verfahren zur Herstellung eines Airbags (1), wobei das Verfahren die Schritte umfasst: Extrusionsblasen eines ausgewählten Kunststoffmaterials, um einen Airbag (1) zu bilden, unter Verwendung einer Form, die dem endgültigen unaufgeblasenen Zustand des Airbags entspricht, wobei die Form so ausgebildet ist, dass das extrudierte Airbag mindestens einen zurückversetzten Bereich (8), (10) aufweist, der sich beim Aufblasen des Airbags nach außen erstreckt, **dadurch gekennzeichnet, dass** der Kunststoff ABS und PC umfasst.

2. Verfahren nach Anspruch 1, wobei der Kunststoff mindestens 40% ABS und PC umfasst.

3. Verfahren nach Anspruch 2, wobei der Kunststoff mindestens 80% ABS und PC umfasst.

4. Verfahren nach einem vorangehenden Anspruch, umfassend den weiteren Schritt des Vorsehens eines Gasgenerators (4) für den Airbag (1).

5. Verfahren nach einem vorangehenden Anspruch, wobei der zurückversetzte Bereich eine zurückversetzte Nut (8) umfasst.

6. Verfahren nach Anspruch 5, wobei die Nut (8) ringförmig ist.

7. Verfahren nach Anspruch 5 oder 6, wobei die Zurückversetzung einen zentralen zurückversetzten Bereich (10) umfasst.

8. Verfahren nach Anspruch 1, wobei der Kunststoff eine Mischung von ABS und PC umfasst.

9. Ein Airbag (1) hergestellt durch ein Verfahren nach einem der vorangehenden Ansprüche.

## Revendications

1. Procédé pour fabriquer un coussin de sécurité gonflable (1), le procédé comprend les étapes consistant à mouler par soufflage une matière plastique sélectionnée pour former le coussin de sécurité gonflable (1) en utilisant un moule correspondant à l'état dégonflé final du coussin de sécurité gonflable, le moule étant tel que le coussin de sécurité gonflable moulé a au moins une région dentelée (8), (10), qui suite au gonflage du coussin de sécurités gonflable, s'étend vers l'extérieur, **caractérisé en ce que** la matière plastique comprend de l'ABS et du PC.

2. Procédé selon la revendication 1, dans lequel la matière plastique comprend au moins 40 % d'ABS et de PC.

3. Procédé selon la revendication 2, dans lequel la matière plastique comprend au moins 80 % d'ABS et de PC.

4. Procédé selon l'une quelconque des revendications précédentes, comprenant l'étape supplémentaire consistant à prévoir un générateur de gaz (4) pour le coussin de sécurité gonflable (1).

5. Procédé selon l'une quelconque des revendications précédentes, dans lequel la région dentelée comprend une rainure dentelée (8).

6. Procédé selon la revendication 5, dans lequel la rainure (8) est annulaire.

7. Procédé selon la revendication 5 ou la revendication 6, dans lequel la dentelure comprend une zone dentelée centrale (10).

8. Procédé selon la revendication 1, dans lequel la matière plastique comprend un mélange d'ABS et de PC.

9. Coussin de sécurité gonflable (1) fabriqué par un procédé selon l'une quelconque des revendications précédentes.
